Europäisches Patentamt

**European Patent Office**

Office européen des brevets

(11) Veröffentlichungsnummer : **0 102 625**
**B1**

(12) **EUROPÄISCHE PATENTSCHRIFT**

(45) Veröffentlichungstag der Patentschrift :
27.05.87

(51) Int. Cl.⁴ : **B 21 D 28/02**

(21) Anmeldenummer : 83108645.9

(22) Anmeldetag : 01.09.83

(54) **Ausklinkvorrichtung.**

(30) Priorität : 07.09.82 DE 3233208

(43) Veröffentlichungstag der Anmeldung :
14.03.84 Patentblatt 84/11

(45) Bekanntmachung des Hinweises auf die Patenterteilung : 27.05.87 Patentblatt 87/22

(84) Benannte Vertragsstaaten :
AT BE CH DE FR GB IT LI LU NL SE

(56) Entgegenhaltungen :
DE-A- 2 710 855
DE-A- 2 931 410
DE-B- 2 601 858
DE-U- 7 225 345

(73) Patentinhaber : **Ludwig Boschert GmbH & Co. KG
Maschinen- und Apparatebau
Mattenstrasse 1
D-7850 Lörrach-Hauingen (DE)**

(72) Erfinder : **Fazis, Harald
Läublinstrasse 26
D-7858 Weil (DE)**

(74) Vertreter : **Gauger, Hans-Peter, Dipl.-Ing.
Patentanwälte Dipl.-Ing.Hans-Jürgen Müller Dipl.-
Chem.Dr.Gerhard Schupfner Dipl.-Ing.Hans-Peter
Gauger Lucile-Grahn-Strasse 38
D-8000 München 80 (DE)**

**Beschreibung**

Die Erfindung bezieht sich auf eine Ausklinkvorrichtung der durch den Patentanspruch 1 angegebenen Gattung.

Bei einer aus der DE-A-29 31 410 bekannten Ausklinkvorrichtung dieser Art sind das Obermesser als eine schmale Schneide für eine unmittelbare Befestigung an dem Kopf des vertikal beweglichen Stößels und das Untermesser als ein zwei- oder mehrteiliger Messersatz für eine Befestigung mittels einer Matrize an einem Matrizenhalter des Maschinentisches ausgebildet. Oberhalb dieses Matrizenhalters ist eine aus einer Grundplatte und einer Auflageplatte gebildete Werkstückführung mit an der Auflageplatte verstellbar befestigten Anschlagplatten für ein auszuklinkendes Werkstück angeordnet, wobei die Auflageplatte einen im Verschiebeweg des Obermessers ausgebildeten Winkelausschnitt von 90° aufweist und auf der Grundplatte um die nahe der Ausklinkspitze liegende Drehachse verschwenkbar ist. Damit ist es mittels dieser bekannten Ausklinkvorrichtung möglich, mittels zweier aufeinanderfolgender Arbeitshübe des Stößels und einer dazwischen vorgenommenen Verschwenkung der Werkstückführung aus einer mittels Anschlägen entsprechend einem gewünschten Winkel eingestellten ersten Ruhelage in eine ebenfalls eingestellte zweite Ruhelage beliebig große Winkel bis maximal 90° aus Werkstücken auszuklinken, wobei für jeden der beiden Arbeitshübe optimale Schnittverhältnisse zwischen der Schneide des Obermessers und den beiden dabei abwechselnd zur Wirkung kommenden Schneiden des Untermessers sichergestellt sind. Bei dieser bekannten Ausklinkvorrichtung ist jedoch nachteilig, daß bei dieser Aufeinanderfolge der beiden Arbeitshübe des Stößels das auf der Auflageplatte aufliegende Werkstück gemeinsam mit der Werkstückführung verschwenkt wird, so daß insbesondere bei größeren und dabei regelmäßig über den Maschinentisch nach vorne vorstehenden Werkstücken eine ständige Verletzungsgefahr für die vor der Ausklinkvorrichtung stehende Bedienungsperson besteht. Bei größeren Winkeln und einer größeren Schwungmasse der Werkstücke werden auch die für die beiden Ruhelagen der Werkstückführung verstellbar vorgesehenen Anschläge entsprechend verstärkt beansprucht, so daß die Ausklinkungen ungenau werden können, wenn die Anschläge nicht rechtzeitig nachgestellt werden.

Aus der DE-C-27 10 855 ist eine gattungsfremde Stanzvorrichtung bekannt, bei der die beiden dabei für ein Formstanzen von Werkstücken vorgesehenen und einen mit den auszustanzenden Formen übereinstimmenden Verlauf ihrer Messerkanten aufweisenden Werkzeugteile jedes austauschbar verwendeten Werkzeugsatzes an Drehscheiben befestigt sind, die synchron um gleiche Winkelbeträge drehbar sind. Die drehbare Anordnung der Werkzeugteile ist dabei zu dem insbesondere beim Formstanzen von Werkstücken mit unregelmäßigen Konturen interessierenden Zweck verwirklicht, eine optimale Kleinhaltung des Stanzabfalls durch eine sehr dichte Anordnung der einzelnen Stanzpositionen für eine entsprechend optimale Raumausnutzung der Bleche zu ermöglichen. Die Erreichbarkeit dieses Ziels hat somit bei dieser gattungsfremden Stanzvorrichtung die Möglichkeit einer gemeinsamen Positionsveränderung der beiden Werkzeugteile des jeweils verwendeten Werkzeugsatzes relativ zu dem damit auszustanzenden Blech zur Voraussetzung, und es muß dabei der gesamte Werkzeugsatz ausgetauscht werden, wenn diese Zielsetzung für eine anders verlaufende Stanzform der Werkstücke ebenfalls entsprechend optimal erreichbar sein soll.

Die Erfindung, wie sie in den Patentansprüchen gekennzeichnet ist, löst die Aufgabe, eine Ausklinkvorrichtung der angegebenen Gattung derart auszubilden, daß Ausklinkungen an einem Werkstück auch größerer Abmessungen gefahrloser für die Bedienungsperson vorgenommen werden können, wobei die Ausklinkungen eine beliebige Größe des Winkels aufweisen können sowie jeweils mit zwei Arbeitshüben durchgeführt werden und dafür eine einfache Verstellmöglichkeit der Ausklinkvorrichtung bei einem Überwechseln auf einen anderen gewünschten Winkel besteht.

Die durch die Erfindung erreichten Vorteile liegen im wesentlichen darin, daß durch das Vorsehen der gemeinsam verschwenkbaren Stellringe als Halter für die Ausklinkmesser und die dabei gleichzeitige Ausbildung des unteren Stellringes als Hilfstisch das Werkstück zwischen den beiden Arbeitshüben seine Relativlage bezüglich des Maschinentisches nicht verändert, da bei der Verschwenkung der Stellringe aus einer entsprechend dem jeweils gewünschten Winkel eingestellten ersten Ruhelage in eine eingestellte zweite Ruhelage der untere Stellring mit dem an ihm befestigten Untermesser an dem vorzugsweise zwischen Tischanschlägen angeordneten Werkstück vorbeibewegt werden kann. Da der gemeinsame Schwenkweg dieser Stellringe einfach verändert werden kann, ist damit auch ein problemloses Überwechseln zwischen beliebig großen Winkeln sichergestellt, und es besteht damit auch die Möglichkeit, beispielsweise bei einem übereinstimmenden Spitzenwinkel von 30° der Ober- und Untermesser mit nur einem Arbeitshub des Stößels einen Winkel von 30° und mit zwei Arbeitshüben beliebig große Winkel bis 120° und mehr aus Werkstücken auszuklinken zu können.

Ein Ausführungsbeispiel der erfindungsgemäßen Ausklinkvorrichtung ist in der Zeichnung schematisch dargestellt und wird nachfolgend näher beschrieben.

Es zeigt

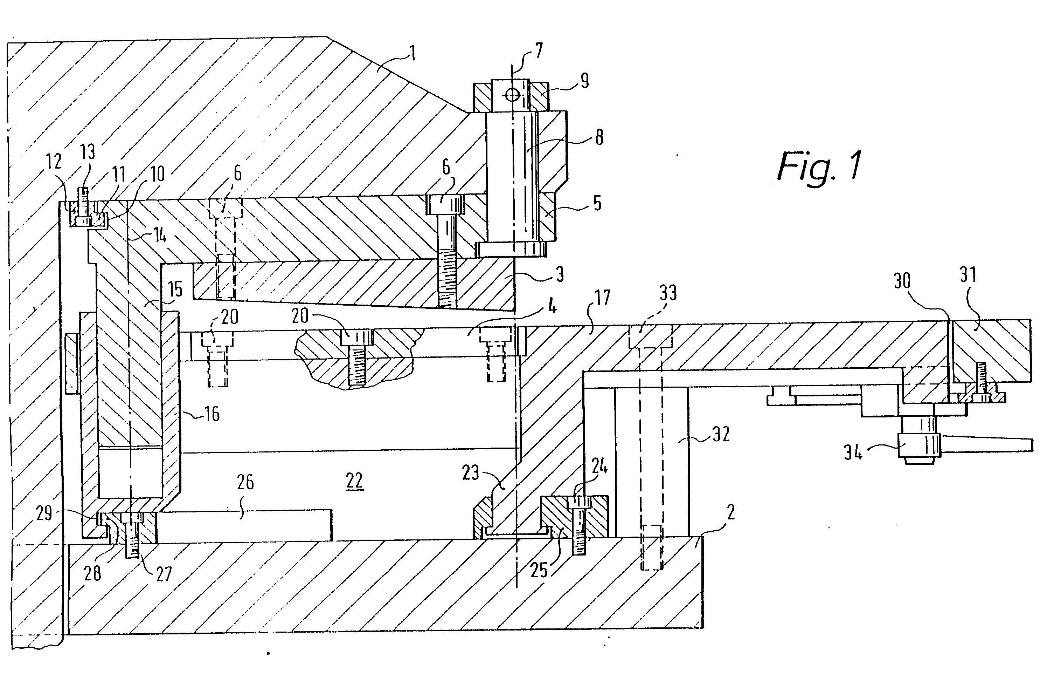

Figur 1 eine Schnittdarstellung der Ausklinkvorrichtung,

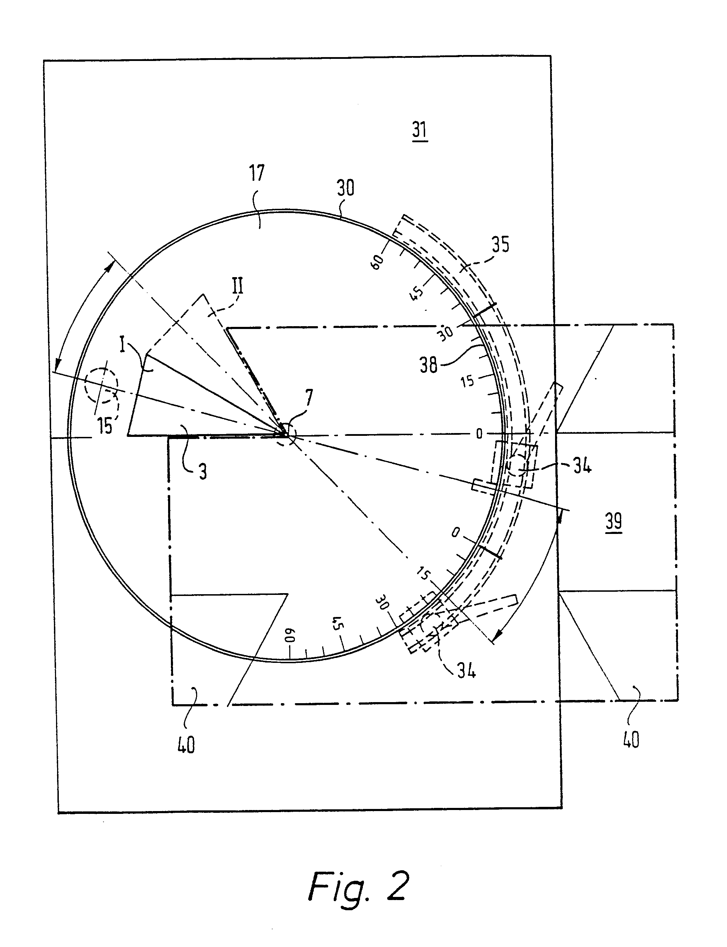

Figur 2 eine Draufsicht auf das Obermesser und

Figur 3 eine Draufsicht auf das Untermesser der Ausklinkvorrichtung gemäß Figur 1.

Die Ausklinkvorrichtung kann beispielsweise an einer Ausklinkmaschine der in der US-A-4 129 054 beschriebenen Ausbildung vorgesehen werden, indem dafür dann an dem vertikal beweglichen Stößel noch ein rückwärtiger Arm 1 oberhalb eines rückwärtigen Maschinentisches 2 ausgebildet wird. Damit ist es dann alternativ möglich, mit dem an dem vorderen Arm des Stößels vorgesehenen Obermesser und dem an dem vorderen Arm des Stößels vorgesehenen Obermesser und dem an dem vorderen Maschinentisch vorgesehenen Untermesser unveränderliche Winkel von beispielsweise 90° auszuklinken, während die Rückseite der Ausklinkmaschine für das Ausklinken von veränderlichen Winkeln zwischen beispielsweise 30° und 120° vorbehalten bleibt.

Die Ausklinkvorrichtung umfaßt ein mit einem Spitzenwinkel von 30° zwischen seinen beiden Schneiden einteilig ausgebildetes Obermesser 3 und ein aus zwei Einzelmessern unter dem gleichen Spitzenwinkel zusammengesetztes Untermesser 4. Die Schneidspitzen dieser beiden Ausklinkmesser können mit einer Rundung mit einem Krümmungsradius von 0,5 mm versehen sein. Das Obermesser 3 ist an einem oberen Stellring 5 mittels Bolzen 6 festgelegt. Der obere Stellring 5 ist in einer im Mittelpunkt des Abrundungskreises der Obermesserspitze liegenden Drehachse 7 mittels eines Drehzapfens 8 und einer auf diesen aufgeschraubten Mutter 9 an dem rückwärtigen Arm 1 des Stößels verschwenkbar festgelegt.

An dem oberen Stellring 5 ist eine erste Führungsnut 10 ausgebildet, die eine zu der Drehachse 7 konzentrische, kreisförmige Krümmung aufweist. In die Führungsnut 10 faßt ein Vorsprung 11 eines ersten Gleitstückes 12 ein, das mittels Schrauben 13 an dem rückwärtigen Arm 1 des Stößels festgelegt ist und ebenfalls einen zu der Drehachse 7 konzentrischen, kreisförmigen Krümmungsverlauf aufweist. Die Führungsnut 10 und das Gleitstück 12 ergeben für den oberen Stellring 5 eine einem Mittelpunktswinkel von 150° entsprechende Führungslänge. An dem oberen Stellring 5 ist weiterhin in einer zur Drehachse 7 parallelen Starrachse 14 ein Führungsbolzen 15 ausgebildet, der in eine Führungsbuchse 16 eines zur Befestigung des Untermessers 4 vorgesehenen unteren Stellringes 17 einfaßt. Die beiden Einzelmesser 18 und 19 des Untermessers 4 sind dabei innerhalb einer Aussparung 21 dieses unteren Stellringes 17 angeordnet, wobei diese Aussparung 21 mit einer Öffnung 22 in Verbindung steht, über welche die anfallenden Blechabfälle entnommen werden können.

Der untere Stellring 17 weist einen in der Drehachse 7 verlaufenden Drehzapfen 23 auf, der in eine Lagerbohrung eines an dem rückwärtigen Maschinentisch 2 mittels Bolzen 24 befestigten Befestigungsstückes 25 einfaßt. Die mittels des Befestigungsstückes 25 im Bereich der Drehachse 7 erhaltene Abstützung des unteren Stellringes 17 gegenüber dem rückwärtigen Maschinentisch 2 wird im Bereich der Starrachse 14 durch ein zweites Gleitstück 26 ergänzt, das mittels Bolzen 27 ebenfalls an dem Maschinentisch 2 festgelegt ist und wie das erste Gleitstück 12 eine zu der Drehachse 7 konzentrische, kreisförmige Krümmung mit einer einem Mittelpunktswinkel von 150° entsprechenden Führungslänge aufweist. Auch das zweite Gleitstück 26 weist einen Vorsprung 28 auf, mit dem es in eine zweite Führungsnut 29 des unteren Stellringes 17 einfaßt. Die über die Starrachse 14 miteinander verbundenen Stellringe 5 und 17 sind damit um die Drehachse 7 gemeinsam verschwenkbar.

Der untere Stellring 17 ist als ein zu dem rückwärtigen Maschinentisch 2 parallel angeordneter Hilfstisch ausgebildet, der in einer Öffnung 30 eines mit diesem Hilfstisch planparallel angeordneten Anschlagtisches 31 eingesetzt ist. Der Anschlagtisch 31 ist durch vier Abstützsäulen 32 an dem Maschinentisch 2 abgestützt und mittels Bolzen 33 befestigt. In dem Anschlagtisch 31 sind nicht näher gezeigte T-Nuten für verstellbare Tischanschläge für die Werkstücke ausgebildet, die für das Ausklinken mittels ebenfalls nicht näher dargestellter Niederhalter festgehalten werden. Der untere Stellring 17 ist an dem Anschlagtisch 31 mittels einer Knebelgriffanordnung 34 feststellbar, die ein zu der Drehachse 7 konzentrisches, kreisförmiges Führungssegment 35 mit einer ebenfalls einem Mittelpunktswinkel von 150° entsprechenden Führungslänge umfaßt. Weiterhin ist an dem Anschlagtisch 31 noch ein Stellantrieb in der Ausbildung eines doppeltwirkenden Druckzylinders 36 für die gemeinsame Verstellung der beiden Stellringe 5 und 17 befestigt, wobei die Kolbenstange 37 dieses Druckzylinders an dem unteren Stellring 17 angelenkt ist. Anstelle eines solchen doppeltwirkenden Druckzylinders kann als Stellantrieb auch ein NCgesteuerter Spindelantrieb vorgesehen sein. Die beiden Stellringe 5 und 17 sind schließlich noch mit einer über 150° reichenden Winkelskala 38 versehen, bei der zwei auf die Drehachse 7 mit einem Mittelpunktswinkel von 30° ausgerichtete Nullmarken vorgesehen sind, bezüglich welcher sich zwei Hälften dieser Winkelskala um jeweils 60° erstrecken.

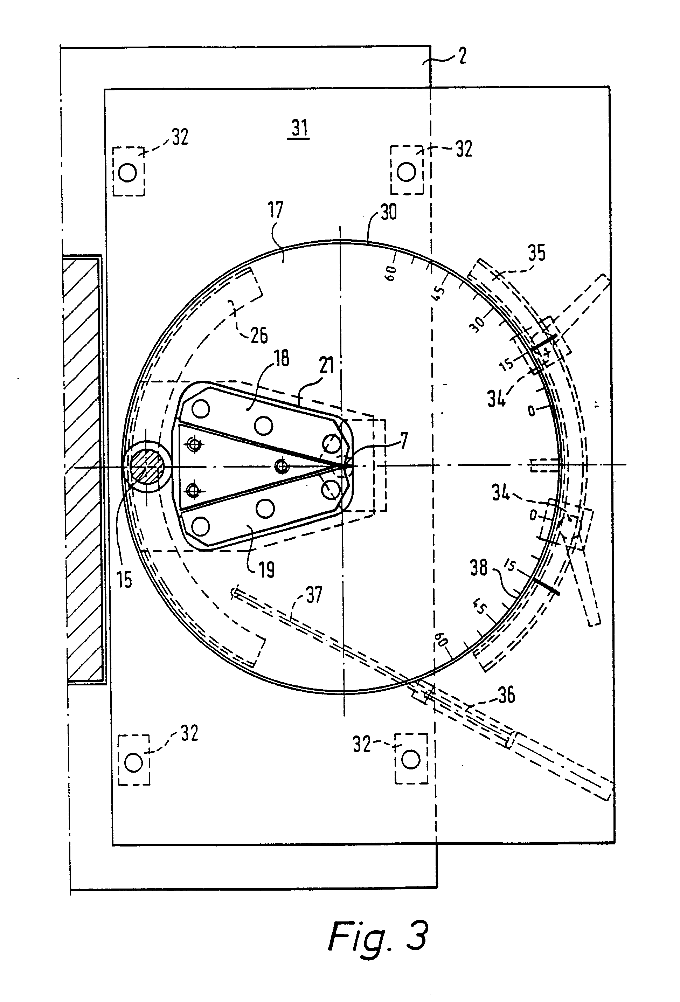

Wenn die beiden Einzelmesser 18 und 19 des Untermessers 5 und damit auch das Obermesser 4 in die in Figur 3 dargestellte Schwenklage eingestellt sind, dann können damit an Werkstücken 39, die auf den durch den unteren Stellring 17 gebildeten Hilfstisch und den Anschlagtisch 31 aufgelegt werden, Ausklinkungen mit dem für die beiden Ausklinkmesser festliegenden minimalen Spitzenwinkel von 30° erzeugt werden. Wenn an den Werkstücken Ausklinkungen mit einem größeren Winkel bis maximal 120° erzeugt werden sollen, so beispielsweise Ausklinkungen 40 mit einem Winkel von 60° oder 67,5°, so müssen dafür die an die verstellbaren Tischanschläge des Anschlagtisches 31 angelegten Werkstücke 39 zunächst in einer ersten relativen Schwenklage I des Obermessers 3 und einer damit entsprechenden Schwenklage auch des Untermessers 4 mit einem ersten Arbeitshub des Stößels mit einem Winkel von 30° versehen werden. Danach müssen die beiden Ausklinkmesser durch ein gemeinsames Verschwenken der beiden Stellringe 5 und 17 um die Drehachse 7 mittels des Druckzylinders 36 in eine zweite Schwenklage II verstellt werden, worauf dann mit einem zweiten Arbeitshub des Stößels der Winkel auf das gewünschte Fertigmaß von 60° oder 67,5° erweitert wird. Die Festlegung der zweiten Schwenklage II wird dabei durch Betätigung der Knebelgriffanordnung 34 vorgenommen, womit der untere Stellring 17 von dem Anschlagtisch 31 gelöst und somit gemeinsam mit dem oberen Stellring 5 um die Drehachse 7 längs der Winkelskala 38' verschwenkt werden kann, auf der somit der Winkelunterschied zu dem größeren Winkel genau abgelesen werden kann und es damit auch möglich ist, die zweite Schwenklage II mit einer erneuten Betätigung der Knebelgriffanordnung 34 präzise einzustellen. Die Verschwenkung der beiden Stellringe bei gelöster Knebelgriffanordnung kann dabei mit oder ohne Unterstützung des Druckzylinders 36 geschehen. Die beiden einmal eingestellten Schwenklagen I und II können im übrigen mittels verstellbarer Anschläge fixiert werden, was dann in Verbindung mit einer geeigneten Ankoppelung der Betätigung des Druckzylinders 36 an die Arbeitshübe des Stößels die Möglichkeit schafft, daß die beiden Stellringe 5 und 17 für eine aufeinanderfolgende Bearbeitung von Werkstücken mit jeweils zwei Arbeitshüben des Stößels zwischen diesen Arbeitshüben automatisch aus der Schwenklage I in die Schwenklage II verstellt werden.

Das Obermesser 3 kann wie das Untermesser 4 aus zwei einzeln auswechselbaren Einzelmessern zusammengesetzt werden. Beide Ausklinkmesser können auch beispielsweise aus drei dreieckförmig angeordneten Einzelmessern bestehen, womit es dann mittels der Ausklinkvorrichtung auch möglich ist, in Werkstücken entsprechend polygonale Ausstanzungen mit wenigstens zwei Arbeitshüben des Stößels zu erzeugen.

**Patentansprüche**

1. Ausklinkvorrichtung mit einem zur Befestigung an dem Kopf eines vertikal beweglichen Stößels vorgesehenen Obermesser (3) mit festliegendem minimalem Spitzenwinkel und mit einem zur Befestigung am Maschinentisch (2) vorgesehenen Untermesser (4) gleichen Winkels, wobei Werkstück (39) und Ausklinkmesser (3, 4) um eine nahe der Ausklinkspitze liegende Drehachse (7) relativ zueinander verschwenkbar sind, dadurch gekennzeichnet, daß das Obermesser (3) an einem oberen Stellring (5) festgelegt ist, der für eine um die Drehachse (7) verschwenkbare Anordnung am Kopf des Stößels ausgebildet ist und über eine zur Drehachse (7) parallele Starrachse (14) mit einem unteren Stellring (17) für eine mit dem oberen Stellring (5) gemeinsame Verschwenkbarkeit um die Drehachse (7) verbunden ist, wobei der untere Stellring (17) zur Befestigung des Untermessers (4) vorgesehen und als Hilfstisch ausgebildet ist.

2. Ausklinkvorrichtung nach Anspruch 1, dadurch gekennzeichnet, daß die Starrachse (14) eine zu der Drehachse (7) konzentrische, kreisförmige Führung aufweist.

3. Ausklinkvorrichtung nach Anspruch 2, dadurch gekennzeichnet, daß die kreisförmige Führung wenigstens aus einem zur Befestigung am Kopf des Stößels vorgesehenen ersten Gleitstück (12) besteht, an dem ein in eine erste Führungsnut (10) des oberen Stellrings (5) einfassender Vorsprung (11) ausgebildet ist.

4. Ausklinkvorrichtung nach einem der Ansprüche 1 bis 3, dadurch gekennzeichnet, daß der untere Stellring (17) einen in der Drehachse (7) verlaufenden Drehzapfen (23) aufweist, der in eine Lagerbohrung eines zur Befestigung an dem Maschinentisch (2) und zur Abstützung des unteren Stellrings (17) vorgesehenen Befestigungsstückes (25) einfaßt.

5. Ausklinkvorrichtung nach einem der Ansprüche 1 bis 4, dadurch gekennzeichnet, daß der obere Stellring (5) an dem unteren Stellring (17) parallel zu der Drehachse (7) geführt ist.

6. Ausklinkvorrichtung nach Anspruch 5, dadurch gekennzeichnet, daß der obere Stellring (5) einen in der Starrachse (14) angeordneten Führungsbolzen (15) aufweist, der in eine Führungsbuchse (16) des unteren Stellrings (17) einfaßt.

7. Ausklinkvorrichtung nach einem der Ansprüche 1 bis 6, dadurch gekennzeichnet, daß der untere Stellring (17) an der Starrachse (14) durch ein am Maschinentisch (2) festgelegtes zweites Gleitstück (26) abgestützt ist.

8. Ausklinkvorrichtung nach den Ansprüchen 2 und 7, dadurch gekennzeichnet, daß an dem zweiten Gleitstück (26) eine konzentrisch zu der Drehachse (7) kreisförmig gekrümmte Führung für den unteren Stellring (17) ausgebildet ist.

9. Ausklinkvorrichtung nach Anspruch 8, dadurch gekennzeichnet, daß der untere Stellring (17) eine zweite Führungsnut (29) aufweist, in die ein Vorsprung (28) des zweiten Gleitstücks (26) einfaßt.

10. Ausklinkvorrichtung nach einem der Ansprüche 1 bis 9, dadurch gekennzeichnet, daß das Obermesser (3) und/oder das Untermesser (4) aus wenigstens zwei einzeln auswechselbaren Einzelmessern (18, 19) zusammengesetzt sind.

11. Ausklinkvorrichtung nach einem der Ansprüche 1 bis 10, dadurch gekennzeichnet, daß die Schneidspitzen der beiden Ausklinkmesser (3, 4) mit einer Rundung mit einem Krümmungsradius von etwa 0,5 mm versehen sind, in deren Krümmungsmittelpunkt die Drehachse (7) angeordnet ist.

12. Ausklinkvorrichtung nach einem der Ansprüche 1 bis 11, dadurch gekennzeichnet, daß die beiden Stellringe (5, 17) durch einen pneumatischen, hydraulischen oder mechanischen Stellantrieb (36) gemeinsam verschwenkbar sind.

13. Ausklinkvorrichtung nach einem der Ansprüche 1 bis 12, dadurch gekennzeichnet, daß der untere Stellring (17) in eine Öffnung (30) eines planparallel angeordnet und mit verstellbaren Tischanschlägen versehenen Anschlagtisches (31) eingesetzt ist.


**Claims**

1. A notching device comprising an upper knife (3) having a fixed minimum angle and adapted for being fixed to the head of a vertically movable ram, and a lower knife (4) having the same angle and provided for being fixed on the machine table (2), whereby a workpiece (39) and the notching knives (3, 4) are adapted for being rotated relative to each other around an axis of rotation (7) which is situated in the vicinity of the notching point, characterized in that the upper knife (3) is mounted on an upper set collar (5) which is formed for being rotated around the axis of rotation (7) and arranged on the head of the ram and which is connected to a lower set collar (17) through a rigid axis (14) which is in parallel to the axis of rotation (7) and provided for a rotation around the axis of rotation (7) in common with the upper set collar (5), whereby the lower set collar (17) is provided for the fixation of the lower knife (4) and is formed as an auxiliary table.

2. A notching device according to claim 1, characterized in that the rigid axis (14) is provided with a circular guide concentric to the axis of rotation (7).

3. A notching device according to claim 2, characterized in that the circular guide comprises at least a first sliding piece (12) provided for being fixed on the head of the ram and formed with a projection (11) that projects into a first guide groove (10) of the upper set collar (5).

4. A notching device according to any of the claims 1 to 3, characterized in that the lower set collar (17) comprises a pivot pin (23) extending along the axis of rotation (7) and projecting into a bearing hole of a mounting piece (25) which is provided for being fixed on the machine table (2) and for supporting the lower set collar (17).

5. A notching device according to any of the claims 1 to 4, characterized in that the upper set collar (5) is guided on the lower set collar (17) in parallel to the axis of rotation (7).

6. A notching device according to claim 5, characterized in that the upper set collar (5) comprises a guide bolt (15) that is arranged in the rigid axis (14) and projecting into a guide bushing (16) of the lower set collar (17).

7. A notching device according to any of the claims 1 to 6, characterized in that the lower set collar (17) is supported on the rigid axis (14) by means of a second sliding piece (26) which is mounted on the machine table (2).

8. A notching device according to the claims 2 and 7, characterized in that said second sliding piece (26) is formed with a circularly curved guide for the lower set collar (17) and concentric with the axis of rotation (7).

9. A notching device according to claim 8, characterized in that the lower set collar (17) comprises a second guide groove (29) into which a projection (28) of the second sliding piece (26) projects.

10. A notching device according to any of the claims 1 to 9, characterized in that the upper knife (3) and/or the lower knife (4) are composed of at least two blades (18, 19) which are individually exchangeable.

11. A notching device according to any of the claims 1 to 10, characterized in that the cutting points of the two notching knives (3, 4) are provided with a rounding having a radius of curvature of about 0,5 mm in the centre of curvature of which the axis of rotation (7) is being arranged.

12. A notching device according to any of the claims 1 to 11, characterized in that the two set collars (5, 17) are adapted for being commonly rotated by means of a pneumatic, a hydraulic or a mechanic actuating drive (36).

13. A notching device, according to any of the claims 1 to 12, characterized in that the lower set collar (17) is inserted into an opening (30) of an abutment table (31) which is arranged plane-parallel and provided with adjustable table stops.


**Revendications**

1. Dispositif d'encochage comportant un couteau supérieur (3) qui est destiné à être fixé à la tête d'un coulisseau mobile verticalement et présente un angle de pointe minimal déterminé, et un couteau inférieur (4) destiné à être fixé à la table de machine-outil (2) et présentant un angle identique, la pièce à usiner (39) et les couteaux d'encochage (3, 4) étant aptes à subir un déplacement relatif par pivotement autour d'un axe de rotation (7) situé à proximité de la pointe d'encochage, caractérisé en ce que le couteau supérieur (3) est assujetti à une bague de réglage supérieure (5) conçue pour être montée, à pivotement autour de l'axe de rotation (7), sur la tête du coulisseau et reliée, par un axe rigide (14) parallèle à l'axe de rotation (7), à une bague de réglage inférieure (17) pour que celle-ci puisse pivoter solidairement avec la bague de réglage supérieure (5) autour de l'axe de rotation (7), la bague de réglage inférieure (17) étant destinée à la fixation du couteau inférieur (4) et constituant une table auxiliaire.

2. Dispositif d'encochage selon la revendication 1, caractérisé en ce que l'axe rigide (14) présente un élément de guidage circulaire, concentrique à l'axe de rotation (7).

3. Dispositif d'encochage selon la revendication 2, caractérisé en ce que l'élément de guidage circulaire comprend au moins une première coulisse (12) destinée à être fixée à la tête du coulisseau et sur laquelle est formée une partie en saillie (11) s'engageant dans une première rainure de guidage (10) de la bague de réglage supérieure (5).

4. Dispositif d'encochage selon l'une des revendications 1 à 3, caractérisé en ce que la bague de réglage inférieure (17) présente un tourillon (23) qui s'étend sur l'axe de rotation (7) et s'engage dans un alésage formant palier d'une pièce de fixation (25) destinée à être fixée à la table de machine-outil (2) et à supporter la bague de réglage inférieure (17).

5. Dispositif d'encochage selon l'une des revendications 1 à 4, caractérisé en ce que la bague de réglage supérieure (5) est guidée sur la bague de réglage inférieure (17) dans une direction parallèle à l'axe de rotation (7).

6. Dispositif d'encochage selon la revendication 5, caractérisé en ce que la bague de réglage supérieure (5) présente, disposée sur l'axe rigide (14), une broche-guide (15) qui s'engage dans une douille de guidage (16) de la bague de réglage inférieure (17).

7. Dispositif d'encochage selon l'une des revendications 1 à 6, caractérisé en ce que la bague de réglage inférieure (17) est supportée, au niveau de l'axe rigide (14), par une seconde coulisse (26) assujettie à la table de machine-outil (2).

8. Dispositif d'encochage selon les revendications 2 et 7, caractérisé en ce que, sur la seconde coulisse (26), est formée, pour la bague de réglage inférieure (17), un élément de guidage incurvé sous une forme circulaire concentriquement à l'axe de rotation (7).

9. Dispositif d'encochage selon la revendication 8, caractérisé en ce que la bague de réglage inférieure (17) présente une seconde rainure de guidage (29) dans laquelle s'engage une partie en saillie (28) de la seconde coulisse (26).

10. Dispositif d'encochage selon l'une des revendications 1 à 9, caractérisé en ce que le couteau supérieur (3) et/ou le couteau inférieur (4) se composent d'au moins deux couteaux individuels (18, 19) remplaçables séparément.

11. Dispositif d'encochage selon l'une des revendications 1 à 10, caractérisé en ce que les pointes tranchantes des deux couteaux d'encochage (3, 4) présentent un arrondi ayant un rayon de courbure d'environ 0,5 mm, au centre de courbure duquel est disposé l'axe de rotation (7).

12. Dispositif d'encochage selon l'une des revendications 1 à 11, caractérisé en ce que les deux bagues de réglage (5, 17) sont aptes à pivoter solidairement sous l'action d'une commande de réglage (36) pneumatique, hydraulique ou mécanique.

13. Dispositif d'encochage selon l'une des revendications 1 à 12, caractérisé en ce que la bague de réglage inférieure (17) est logée dans une ouverture (30) d'une table à butées (31) disposée dans un plan parallèle et pourvue de butées de table à positions réglables.

Fig. 1

0 102 625

*Fig. 2*

0 102 625

*Fig. 3*